# EUROPEAN PATENT SPECIFICATION

(11) **EP 0 706 972 B1**
(45) Date of publication and mention of the grant of the patent: **03.01.2001**
(21) Application number: 95307145.3
(22) Date of filing: 10.10.1995
(51) Int. Cl.: C01B 33/18

(54) **Preparation of fine particulate silica**
Verfahren zur Herstellung von feinteiliger Kieselsäure
Préparation de silice sous forme de particules fines

(30) Priority: 11.10.1994 JP 27172294
(43) Date of publication of application: 17.04.1996
(73) Proprietor: Shin-Etsu Chemical Co., Ltd., Chiyoda-ku Tokyo 100 (JP)
(72) Inventor: Nishimine, Masanobu, c/o Gunma Complex, Annaka-shi, Gunma-ken (JP); Shirasuna, Kiyoshi, c/o Gunma Complex, Annaka-shi, Gunma-ken (JP); Tomizawa, Yoshio, c/o Gunma Complex, Annaka-shi, Gunma-ken (JP); Uehara, Hidekazu, c/o Gunma Complex, Annaka-shi, Gunma-ken (JP); Ueno, Susumu, c/o Gunma Complex, Annaka-shi, Gunma-ken (JP)
(74) Representative: Stoner, Gerard Patrick

(56) References cited:
- EP-A- 0 097 378
- DE-A- 3 525 802
- FR-A- 2 351 052
- FR-A- 2 451 343
- US-A- 5 340 560

## Description

This invention relates to an industrially advantageous process for preparing fine particulate silica, known as fumed silica, having a large specific surface area.

Among conventional processes for the synthesis of fumed silica, the most commonly used one is a pyrogenic hydrolysis process of burning a premix of silicon tetrachloride, hydrogen, and air as disclosed in Japanese Patent Publication (JP-B) No. 46274/1972. In the premix burning process, however, silica can deposit and grow on the burner nozzle to eventually clog the nozzle or cause the risk of backfire or blow-off. The process becomes more dangerous as the burner diameter increases, that is, the production scale increases.

It is proposed in JP-B 4652/1968 and 20138/1971 to produce fumed silica by diffusion combustion of silicon tetrachloride. The process of diffusion burning silicon tetrachloride can solve the problems of the premix combustion, but imposes the burden on silicone manufacturers that the starting silicon tetrachloride must be newly synthesized from metallic silicon and hydrogen chloride.

It is also known from JP-B 38526/1981 and 54085/1983 to synthesize fumed silica by burning a premix of an organohalosilane and air. Since the organohalosilane itself is combustible, the flame has a higher temperature and an increased length, resulting in fumed silica having a smaller specific surface area. In fact, fumed silica products obtained in Examples of JP-B 38526/1981 have a specific surface area of 207 m²/g at maximum. In the premix combustion process, the flame temperature might be reduced simply by increasing the proportion of air. However increasing the proportion of air can cause blow-off in the premix combustion process, failing to provide continuous combustion.

Fumed silica can also be synthesised by burning a premix of organosilane, air and hydrogen according to US 5 340 560. Examples from US 5 340 560 have specific surface areas up to 154 m²/g.

The aim herein is to provide a new and useful process for making fine particulate silica, preferably having a large specific surface area while reducing or eliminating the above-mentioned operational problems.

We have found that when an organohalosilane or organohalodisilane is subject to pyrogenic hydrolysis in a diffusion flame of a combustible gas capable of burning to release water vapor and a free oxygen-containing gas, fumed silica can be synthesized in a simple manner without the risk of backfire or blow-off and without causing silica to deposit on the burner nozzle. We obtained fumed silica with specific surface area as large as 100 to 400 m²/g (as measured by a BET method). The starting material may be an organohalosilane or disilane which is available as a by-product from the synthesis of dimethyldichlorosilane from metallic silicon and an organohalide, for example. The process allows for use of readily available starting materials and reduces operational risks. The process is thus advantageous from both the industrial and economical aspects.

Specifically the present invention provides a process for preparing fine particulate silica comprising the steps of:
feeding an organohalosilane or organhalodisilane through a centre tube (1),
feeding a free-oxygen containing gas through a second tube (2) surrounding the centre tube (1),
feeding a combustible gas capable of burning to release water through a third tube (3), surrounding the second tube (2),
feeding a free-oxygen containing gas through an outer tube (4,6) surrounding the third tube (3), and creating a diffusion flame from the gaseous outflow of said tubes, in which the organohalosilane or organohalodisilane is subjected to pyrogenic hydrolysis to form fine particulate silica.

### BRIEF DESCRIPTION OF THE DRAWINGS

Fig 1. is a cross-sectional view of one exemplary burner used in the practice of the inventive process.

Fig 2. is a cross-sectional view of another exemplary burner used in the practice of the invention process.

According to the present invention, fine particulate silica is prepared by the method as defined in claim 1 herein.

The starting material is any of organohalosilanes and disilanes. Those organohalosilanes or disilanes having a boiling point of up to 200°C are preferred because they must be gasified for supply to the burner. Exemplary organohalosilanes include methyltrichlorosilane, methyldichlorosilane, trimethylchlorosilane, and dimethyldichlorosilane, and exemplary organohalodisilanes include 1,2-dimethyltetrachlorodisilane, 1,1,2-trimethyltrichlorodisilane, 1,1,2,2-tetramethyldichlorosilane, 1,1,1,2-tetramethyldichlorosilane. Preferred are organohalosilanes and disilanes which are available or obtained as by-products from the synthesis of dimethyldichlorosilane from metallic silicon and an organohalide, with the methyltrichlorosilane being especially preferred. "Organo" is usually alkyl, preferably methyl.

The combustible gas capable of burning to release water vapor (H₂O) is typically hydrogen gas while methane, propane and gaseous methanol are acceptable. The combustible gas is essential for effecting hydrolysis of silane and providing active OH groups to the silica surface. It also serves as a source for allowing a stable flame to continue.

The free oxygen-containing gas is preferably air for economy's sake.

Within the requirements of claim 1, any well-known burners may be used for burning the reactants. For example, simple triple or quadruple tube burners may be used.

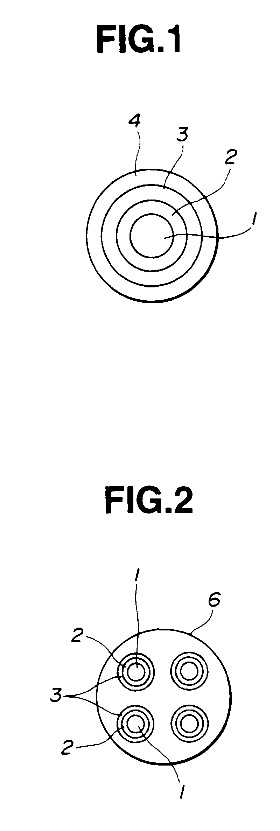

Referring to FIG. 1, there is schematically illustrated a quadruple tube burner including a center tube 1 for feeding the organohalosilane or disilane. An air feed tube 2, a hydrogen feed tube 3, and an air feed tube 4 concentrically surround the center tube 1 from the inside to the outside. FIG. 2 shows another burner arrangement wherein a triple tube assembly 5 includes a center tube 1 for feeding the organohalosilane or disilane, an air feed tube 2 and a hydrogen feed tube 3. A plurality of, four in the illustrated embodiment, triple tube assemblies 5 are distributed in a large tube 6 for feeding air. These burner arrangements are shown for exemplary purposes, and the invention is not limited thereto.

In one preferred embodiment, the organohalosilane or disilane is fed to the center tube 1 at a flow rate of about 0.1 to 10 kg/h, especially about 1 to 5 kg/h, air is fed to the air feed tube 2 at a flow rate of about 0.02 to 10 Nm³/h, especially about 0.2 to 5 Nm³/h, hydrogen is fed to the hydrogen feed tube 3 at a flow rate of about 0.02 to 10 Nm³/h, especially about 0.2 to 5 Nm³/h, and air is further fed to the outer tube 4 or 6 at a flow rate of about 0.02 to 10 Nm³/h, especially about 0.2 to 5 Nm³/h.

According to the present invention, fine particulate silica having a specific surface area as large as 100 to 400 m²/g, especially 200 to 400 m²/g as measured by a BET method can be produced in a simple manner without operational inconvenience. This surface area range is useful as fumed silica. The process of the invention thus has industrial advantages.

### EXAMPLE

Examples of the present invention are given below by way of illustration and not by way of limitation.

### Example 1

A quadruple tube burner as shown in FIG. 1 was used. Pyrogenic hydrolysis was carried out according to a diffusion combustion method by feeding 2.6 kg/h of methyltrichlorosilane through the center tube 1, 0.83 Nm³/h of dry air through the air feed tube 2, 0.39 Nm³/h of hydrogen gas through the hydrogen feed tube 3, and 0.83 Nm³/h of dry air through the outer air feed tube 4. The combustion gases were discharged at a flow rate of 40 Nm³/h for taking out the synthesized fumed silica. Note that the methyltrichlorosilane feed was heated with steam under a gage pressure of 2 kg/cm²G to form a gas feed to the burner.

Fumed silica was produced at a rate of 1.0 kg/h. It had a BET specific surface area of 215 m²/g.

### Example 2

Fumed silica was synthesized by the same procedure as in Example 1 except that 2.6 kg/h of methyltrichlorosilane was fed through the center tube 1, 2.8 Nm³/h of dry air fed through the air feed tube 2, 0.83 Nm³/h of hydrogen gas fed through the hydrogen feed tube 3, and 0.83 Nm³/h of dry air fed through the outer air feed tube 4.

Fumed silica was produced at a rate of 1.0 kg/h. It had a BET specific surface area of 385 m²/g.

### Example 3

Fumed silica was synthesized by the same procedure as in Example 1 except that 2.6 kg/h of methyltrichlorosilane was fed through the center tube 1, 0.57 Nm³/h of dry air fed through the air feed tube 2, 0.83 Nm³/h of hydrogen gas fed through the hydrogen feed tube 3, and 0.83 Nm³/h of dry air fed through the outer air feed tube 4.

Fumed silica was produced at a rate of 1.0 kg/h. It had a BET specific surface area of 121 m²/g.

### Example 4

A quadruple tube burner as shown in FIG. 1 was used. Pyrogenic hydrolysis was carried out according to a diffusion combustion method by feeding 2.6 kg/h of a disilane mixture through the center tube 1, 2.8 Nm³/h of dry air through the air feed tube 2, 0.83 Nm³/h of hydrogen gas through the hydrogen feed tube 3, and 0.83 Nm³/h of dry air through the outer air feed tube 4. The disilane mixture used herein was obtained by synthesizing silanes from metallic silicon and methyl chloride by a direct process to form a crude product and removing main products, organohalosilanes (typically dimethyldichlorosilane) from the crude product, leaving the disilane mixture containing 1,2-dimethyltetrachlorodisilane and other by-products. The disilane mixture was heated with a heating medium at 250°C to form a gas feed to the burner.

Fumed silica was produced at a rate of 1.6 kg/h. It had a BET specific surface area of 250 m²/g.

### Example 5

A funnel type burner as shown in FIG. 2 was used. Pyrogenic hydrolysis was carried out according to a diffusion combustion method by feeding 10 kg/h of methyltrichlorosilane through the center tubes 1, 3.3 Nm³/h of dry air through the air feed tubes 2, 1.6 Nm³/h of hydrogen gas through the hydrogen feed tubes 3, and 3.3 Nm³/h of dry air through the circumscribing tube 6. The combustion gases were discharged at a flow rate of 40 Nm³/h for taking out the synthesized fumed silica. Note that the methyltrichlorosilane feed was heated with steam under a gage pressure of 2 kg/cm²G to form a gas feed to the burner. No interference occurred between the flames.

Fumed silica was produced at a rate of 3.8 kg/h. It had a BET specific surface area of 180 m²/g.

### Comparative Example 1

Pyrogenic hydrolysis was carried out by feeding a premix of 0.52 kg/h of methyltrichlorosilane, 0.81 Nm³/h of dry air, and 0.29 Nm³/h of hydrogen gas through a single tube having a diameter of 1/4 inch. The combustion gases were discharged at a flow rate of 40 Nm³/h as in Example 1.

Due to the high flame temperature, the fumed silica had a BET specific surface area of 61 m²/g.

### Comparative Example 2

The same procedure as in Comparative Example 1 was carried out except that a premix of 0.62 kg/h of methyltrichlorosilane, 0.89 Nm³/h of dry air, and 0.20 Nm³/h of hydrogen was fed. That is, an attempt was made to reduce the flame temperature by reducing the proportion of hydrogen relative to methytrichlorosilane and increasing the proportion of air. The flame was blown off and extinguished.

Although some preferred embodiments have been described, many modifications and variations may be made thereto in the light of the above teachings. It is therefore to be understood that within the scope of the appended claims, the invention may be practiced otherwise than as specifically described.

## Claims

1. A process for preparing fine particulate silica comprising the steps of:
feeding an organohalosilane or organhalodisilane through a centre tube (1),
feeding a free-oxygen containing gas through a second tube (2) surrounding the centre tube (1),
feeding a combustible gas capable of burning to release water through a third tube (3), surrounding the second tube (2),
feeding a free-oxygen containing gas through an outer tube (4,6) surrounding the third tube (3), and creating a diffusion flame from the gaseous outflow of said tubes, in which the organohalosilane or organohalodisilane is subjected to pyrogenic hydrolysis to form fine particulate silica.

2. A process of claim 1 wherein the organohalosilane or organohalodisilane is a by-product from the synthesis of dimethyldichlorosilane from metallic silicon and organohalide.

3. A process of claim 1 or claim 2 wherein the organohalosilane is methyltrichlorosilane.

4. A process of any one the preceding claims wherein the combustible gas is hydrogen.

5. A process of any one of the preceding claims wherein the free oxygen-containing gas is air.

6. A process of any one of claims 1 to 5 wherein the fine particulate silica prepared has a specific surface area of 100 to 400 m²/g as measured by the BET method.

7. A process of claim 6 wherein the fine particulate silica prepared has a specific surface area of 200 to 400 m²/g as measured by the BET method.

8. A process of any one of claims 1 to 7 wherein the organohalosilane or organohalodisilane is fed through the centre tube (1) at a flow rate of 0.1 to 10 kg/h, air is fed through the second tube (2) at a flow rate of 0.02 to 10 Nm³/h, hydrogen is fed through the third tube (3) at a flow rate of 0.02 to 10 Nm³/h, and air is fed through the outer tube (4,6) at a flow rate of 0.02 to 10 Nm³/h.

9. A process of claim 8 wherein the organohalosilane or organohalodisilane is fed through the centre tube (1) at a flow rate of 1 to 5 kg/h, air is fed through the second tube (2) at a flow rate of 0.2 to 5 Nm³/h, hydrogen is fed through the third tube (3) at a flow rate of 0.2 to 5 Nm³/h, and air is fed through the outer tube (4,6) at a flow rate of 0.2 to 5 Nm³/h.

## Patentansprüche

1. Verfahren zur Herstellung feinteiliger Kieselsäure, folgende Schritte umfassend:
das Zuführen eines Organohalogensilans oder Organhalogendisilans durch ein zentrales Rohr (1),
das Zuführen eines freien Sauerstoff enthaltenden Gases durch ein zweites Rohr (2), welches das zentrale Rohr (1) umgibt,
das Zuführen eines brennbaren Gases, das in der Lage ist, unter Freisetzung von Wasser zu verbrennen, durch ein drittes Rohr (3), welches das zweite Rohr (2) umgibt,
das Zuführen eines freien Sauerstoff enthaltenden Gases durch ein äußeres Rohr (4, 6), welches das dritte Rohr (3) umgibt, und das Erzeugen einer Diffusionsflamme aus dem Gasstrom aus den Rohren, in der das Organohalogensilan oder Organohalogendisilan pyrogener Hydrolyse unterzogen wird, um feinteilige Kieselsäure zu bilden.

2. Verfahren nach Anspruch 1, worin das Organohalogensilan oder Organohalogendisilan ein Nebenprodukt der Synthese von Dimethyldichlorsilan aus metallischem Silizium und Organohalogenid ist.

3. Verfahren nach Anspruch 1 oder 2, worin das Organohalogensilan Methyltrichlorsilan ist.

4. Verfahren nach einem der vorangegangenen Ansprüche, worin das brennbare Gas Wasserstoff ist.

5. Verfahren nach einem der vorangegangenen Ansprüche, worin das freien Sauerstoff enthaltende Gas Luft ist.

6. Verfahren nach einem der Ansprüche 1 bis 5, worin die hergestellte feinteilige Kieselsäure eine spezifische Oberfläche von 100 bis 400 m²/g, gemessen nach dem BET-Verfahren, aufweist.

7. Verfahren nach Anspruch 6, worin die hergestellte feinteilige Kieselsäure eine spezifische Oberfläche von 200 bis 400 m²/g, gemessen nach dem BET-Verfahren, aufweist.

8. Verfahren nach einem der Ansprüche 1 bis 7, worin das Organohalogensilan oder Organohalogendisilan durch das zentrale Rohr (1) mit einer Strömungsrate von 0,1 bis 10 kg/g zugeführt wird, Luft durch das zweite Rohr (2) mit einer Strömungsrate von 0,02 bis 10 Nm³/h zugeführt wird, Wasserstoff durch das dritte Rohr (3) mit einer Strömungsrate von 0,02 bis 10 Nm³/h zugeführt wird und Luft durch das äußere Rohr (4, 6) mit einer Strömungsrate von 0,02 bis 10 Nm³/h zugeführt wird.

9. Verfahren nach Anspruch 8, worin das Organohalogensilan oder Organohalogendisilan durch das zentrale Rohr (1) mit einer Strömungsrate von 1 bis 5 kg/h zugeführt wird, Luft durch das zweite Rohr (2) mit einer Strömungsrate von 0,2 bis 5 Nm³/h zugeführt wird, Wasserstoff durch das dritte Rohr (3) mit einer Strömungsrate von 0,2 bis 5 Nm³/h zugeführt wird und Luft durch das äußere Rohr (4, 6) mit einer Strömungsrate von 0,2 bis 5 Nm³/h zugeführt wird.

## Revendications

1. Un procédé de préparation de silice sous forme de particules fines comprenant les étapes consistant à :
amener un organohalosilane ou un organohalodisilane à travers un tube central (1),
amener un gaz contenant de l'oxygène libre à travers un second tube (2) entourant le tube central (1),
amener un gaz combustible capable de brûler pour libérer de l'eau à travers un troisième tube (3), entourant le second tube (2),
amener un gaz contenant de l'oxygène libre à travers un tube externe (4, 6) entourant le troisième tube (3), et créer une flamme de diffusion à partir du débit gazeux desdits tubes, où l'organohalosilane ou l'organohalodisilane est soumis à une hydrolyse pyrogénique pour produire de la silice sous forme de particules fines.

2. Un procédé selon la revendication 1, dans lequel l'organohalosilane ou l'organohalodisilane est un sous-produit de la synthèse du diméthyldichlorosilane à partir de silicium métallique et d'organohalogénure.

3. Un procédé selon la revendication 1 ou la revendication 2, dans lequel l'organohalosilane est du méthyltrichlorosilane.

4. Un procédé selon l'une quelconque des revendications précédentes dans lequel le gaz combustible est l'hydrogène.

5. Un procédé selon l'une quelconque des revendications précédentes, dans lequel le gaz contenant de l'oxygène libre est l'air.

6. Un procédé selon l'une quelconque des revendications 1 à 5, dans lequel la silice sous forme de particules fines qui a été préparée présente une aire de surface spécifique de 100 à 400 m²/g telle que mesurée par le procédé BET.

7. Un procédé selon la revendication 6, dans lequel la silice sous forme de particules fines qui a été préparée présente une aire de surface spécifique de 200 à 400 m²/g telle que mesurée par le procédé BET.

8. Un procédé selon l'une quelconque des revendications 1 à 7, dans lequel l'organohalosilane ou l'organohalodisilane est amené à travers le tube central (1) à un débit de 0,1 à 10 kg/h, l'air est amené à travers le second tube (2) à un débit de 0,02 à 10 Nm³/h, l'hydrogène est amené à travers le troisième tube (3) à un débit de 0,02 à 10 Nm³/h, et l'air est amené à travers le tube externe (4, 6) à un débit de 0,02 à 10 Nm³/h.

9. Un procédé selon la revendication 8, dans lequel l'organohalosilane ou l'organohalodisilane est amené à travers le tube central (1) à un débit de 1 à 5 kg/h, l'air est amené à travers le second tube (2) à un débit de 0,2 à 5 Nm³/h, l'hydrogène est amené à travers le troisième tube (3) à un débit de 0,2 à 5 Nm³/h, et l'air est amené à travers le tube externe (4, 6) à un débit de 0,2 à 5 Nm³/h.
